# EUROPEAN PATENT SPECIFICATION

(11) **EP 0 714 745 B1**
(45) Date of publication and mention of the grant of the patent: **18.03.1998**
(21) Application number: 94119061.3
(22) Date of filing: 02.12.1994
(51) Int. Cl.: B29C 45/17

(54) **Apparatus and process for injection molding a thermoplastic resin article**
Vorrichtung und Verfahren zum Spritzgiessen eines thermoplastischen Kunstharzformteils
Dispositif et procédé pour mouler par injection un objet en résine thermoplastique

(43) Date of publication of application: 05.06.1996
(73) Proprietor: CHEIL INDUSTRIES INC., Taegu 702-050 (KR)
(72) Inventor: Woo, Sang-sun, Kangnam-ku, Seoul (KR); Kim, Dae-sik, Kangnam-ku, Seoul (KR); Kim, Jae-hwan, Uiwangshi, Kyungki-do (KR)
(74) Representative: Hering, Hartmut, Dipl.-Ing.

(56) References cited:
- EP-A- 0 363 948
- GB-A- 2 139 548
- US-A- 5 127 814
- US-A- 5 139 714

## Description

The present invention relates to a moulding machine and a process of injection molding for forming a plastic article according to the preambles of claim 1 and claim 5.

In GB-A-2 139 548 there are disclosed a moulding machine and a process of the kind referred to above and as defined in the precharacterizing clauses of the independent claims 1 and 5.

Generally, when a thermoplastic article is injection-molded through an injection mold unit, the article often has a thick wall section which is designed to reinforce its strength. In this case, it takes more time for the thick section to get hardened than a thin section in that the former contains a relatively higher amount of heat than the latter. Consequently, the thick section is likely to have various surface defects, such as sink marks and twists. A conventional method for eliminating sink marks caused by the shrinkage of resin is to apply additional pressure to offset the shrinkage of a thermoplastic resin immediately after the injection of the thermoplastic resin has been completed. However, it is hard to expect a maximum effect from that conventional method especially when a molded article has a relatively large difference of thickness between its thick wall portion and thin wall portion and also when an article has a complex structure.

Therefore, a foaming agent has been used in order to eliminate sink marks appearing on the surface of the relatively thick wall portion of an article. This foaming is designed to prevent the appearance of sink marks by means of injecting both a thermoplastic resin and a foaming agent at a time so that a hollow portion may be formed within the interior of an article. Nonetheless, this method still faces another problem of surface defects, i.e., swirl marks caused by the foaming gas, which must be solved by a secondary processing.

In GB-A-2 139 548, US-A-4,101,617 and GB-A-2 202 181 there are disclosed processes of eliminating surface defects, such as sink marks, by means of forming a hollow portion within the interior of an thermoplastic article with the high-pressurized gas of over 150 kg/cm² injected through a nozzle or a gas-filling device installed in the cavity of an injection mold unit.

However, in case that an article has a complex structure, the aforementioned method has a difficulty in forming a preferable hollow inside the article to avoid the appearance of sink marks. Even if a gas can be injected to form a hollow, the pressure of the thermoplastic resin inside a mold cavity drops during injection of the gas so that the thermoplastic resin becomes hardened at the surface of an article. This physical phenomena generates stripe-like marks on the surface of an article. In the worst case, the high-pressurized gas penetrates the surface of an article to make it unacceptable.

JP-A-5-16177 discloses another method for injection molding to prevent the formation of sink marks, which is characterized by the set-up of a void inducing member in a mold cavity to introduce a pressurized gas to form a void as large as the dimensional reduction of a thermoplastic resin resulting from its shrinking.

This method of JP-A-5-16177 is believed to be simplier in handling than the aforementioned method in terms of the process preventing sink marks resulting from shrinkage, but it also has prints of pin holes by a void inducing member on the surface of an article. With this method there can be other problems, too; for example, more than one void inducing member must be set up in fixed intervals if a thick wall portion stretches long, and it is difficult to differentiate the time period of pressurizing by the gas introduced by the void inducing member installed at an injection mold unit.

A main object of the present invention is to solve various problems inherent in the conventional methods as mentioned above, and to provide a molding machine and a process of injection molding, which allow to prevent surface defects, such as sink marks, twists and stripe-like marks, on a thermoplastic resin article in a very simple manner.

According to the present invention there is provided a molding machine for injection molding a plastic article as set out in claim 1. Preferred embodiments are subject matters of claims 2 to 4.

In the molding machine according to the invention the liquid foaming agent is injected through the injection pin into the injected plastic material in the mold cavity of the machine The injection pin is assembled with the void forming apparatus which is mounted at a location of the movable mold section or of the stationary mold section. The liquid foaming agent is injected through the injection pin into the injected plastic material in a liquid state without preheating the liquid foaming agent. The void forming apparatus consists of the injection pin and the injection cylinder. The void forming apparatus carries out periodically reciprocal movement into the mold cavity so that the injection pin may enter the cavity when a liquid foaming agent is injected into plastic material, and that the injection pin may return to its original position. The feeding meter is installed in front of the void forming apparatus. The feeding meter measures a predetermined amount of the liquid foaming agent and supplies the liquid foaming agent into the injection cylinder.

More than one void forming apparatus may be mounted at locations of a movable mold section or of a stationary mold section in a accordance with the shape of a molded article. The liquid foaming agent is injected through the injection pin immediately after the total amount of the molten plastic material for an article is injected by the molding machine or after most of the molten plastic material for an article is injected by the molding machine. When a liquid foaming agent is injected into the plastic material in the mold cavity, the liquid foaming agent is heated by heat of the plastic material and vaporized so as to form the void portion of a plastic article. The gasified foaming agent in the void portion becomes dormant after substantial cooling and hardening of the plastic article.

Furtheron the present invention provides a process of injection molding for forming a plastic article as set out in claims 5 to 11.

### Brief Description of Drawings

Fig. 1 is a perspective view of a thermoplastic molded article which shows sink marks at a thick part of the molded article;
Fig. 2 is a sectional view of an injection mold unit to be used in the present invention;
Fig. 3 is a sectional view of the injection mold unit with a void forming apparatus after a liquid foaming agent has been injected into the plastic material during injection of the plastic material;
Fig. 4 is a sectional view of the injection mold unit with a void forming apparatus after the liquid foaming agent has been gasified so as to form a void in the molded article;
Fig. 5 is a graph showing the influence of the amount of a liquid foaming agent on the size of a void; and
Fig. 6 is a graph showing the influence of the amount of a plastic resin in the mold cavity on the size of a void.

A liquid foaming agent is injected either in the course of filling a plastic resin or after the plastic resin has been filled up, and the former process is applied when it is required to make a void large due to the thickness of the thick wall portion of a molded article, while the latter is recommended for the prevention of partial shrinking.

The injection of a liquid foaming agent is carried out instantaneously so that the plastic resin near the injection pin may not get solidified. The failure of an instant injection will result in generating sink marks because the injected foaming agent will evaporate due to the remaining heat of the plastic resin. The required time for injection of a liquid foaming agent depends on the thickness of a product, but usually less than five seconds are allowed for the injection while less than two seconds are more preferable.

The amount of a liquid foaming agent to be injected is determined considering both the volume(A) corresponding to the shrinkage of a product and the volume(B) of the gasified foaming agent. It is more effective to keep the volume(B) a little bit larger than the volume(A).

The void forming apparatus for injecting a liquid foaming agent is operated by a timer according to the signal emitted from the injection mold machine.

It is also preferable to have a slim injection pin because the pin is immediately pulled out after the injection of the liquid foaming agent. The preferable diameter of the pin may be 0.2 to 1 mm so that the trace of the pin can be easily buried by the molten plastic resin.

The mold unit used for the present invention is designed to fit for a plastic molded article with thick wall portions, and therefore the wall of the mold cavity is pierced with a hole at the corresponding position of each thick portion to allow an injection pin to penetrate the molten plastic resin and inject a liquid foaming agent.

It is required for the liquid foaming agent used in the present invention to have the following characteristics;
1) The foaming agent must be kept in a liquid state at a room temperature for easy handling;
2) It must evaporate with the residual heat of the molten plastic resin when the thermoplastic resin gets hardened in the mold cavity;
3) It must not affect the applied plastic resin unfavorably;
4) It should not be detrimental to the human body and the environment; and
5) It should be free from a danger of explosion while handling.

However, there is not a liquid foaming agent that may completely satisfy all the above requirements, so it is desired to select the type of a foaming agent which is the most in proximity to such conditions according to the type of resin to be used. Preferable liquid foaming agents are methanols, hydrochlorofluorocarbons, chlorofluorohydrocarbon, 1,1,1,4,4,4-hexafluorobutane, ethanols, and acetons.

A predetermined amount of a liquid foaming agent is injected instantaneously through the void forming apparatus installed at a predetermined position where a void is formed. Influenced by the residual heat of the molten plastic resin, the injected foaming agent gets gasified instantly within the resin, producing an evaporation pressure and forming a void. Then the plastic resin gets cooled and hardened, beginning to shrink. As this shrinkage is offset by the evaporation pressure of the gasified foaming agent, sink marks can be prevented on the surface of the thick wall portion of a molded article.

The pin for injecting the liquid foaming agent must be slim as mentioned previously. With a slim pin, it is possible to minimize the area of penetration into the plastic resin and it is easy for the penetration hole to be buried by the yet unsolidified resin after the pullout of the pin. With the method used in the present invention, it is easy to control the size and position of a void by means of a void forming apparatus which forms a void through evaporation of a liquid foaming agent by the residual heat of the plastic resin. The absorption of the residual heat of the plastic resin by the liquid foaming agent results in shortening the total cycle time to manufacture an article, thus reducing the production cost.

The use of a slim pin for injecting a liquid foaming agent according to the present invention provides an excellent configuration on the surface of a molded article thanks to the smooth burial of the injection trace by the plastic resin and also presents a higher degree of freedom for designing an article. For example, a void forming apparatus for injecting a liquid foaming agent can be installed either to the movable part or to the stationary part of a mold unit.

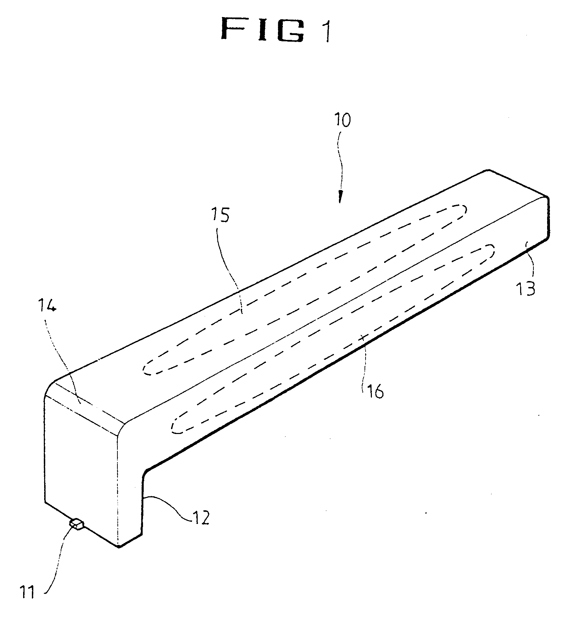

Fig. 1 is a perspective view of a thermoplastic molded article which shows sink marks at a thick part of the molded article. The molded article 10 is formed by the injection of a thermoplastic resin through a gate and it consists of two different parts, a thick wall portion 13 and a thin wall portion 12. A conventional injection molding method would likely produce sink marks on the surfaces within the dotted circles 15 and 16.

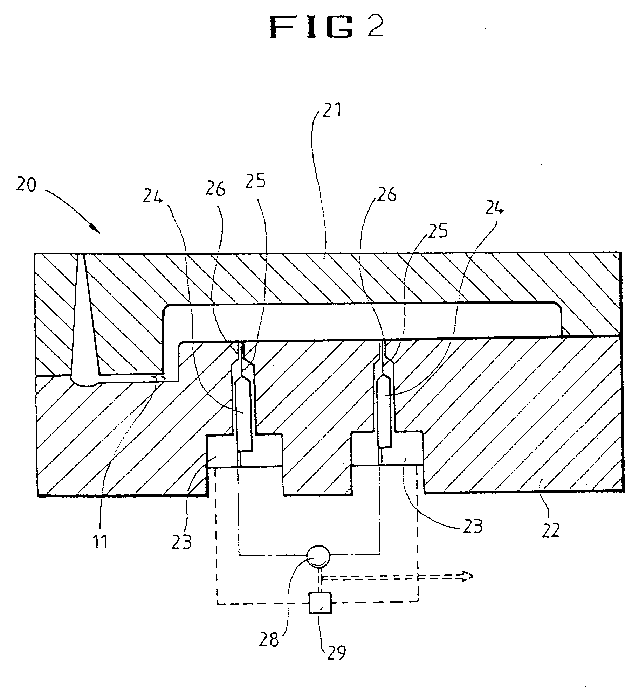

Fig. 2 is a sectional view of an injection mold unit to be used in the present invention. The mold unit 20 consists of a stationary mold section 21 and a movable mold section 22 so as to form a mold cavity. The void forming apparatus consisting of an injection pin 25 and an injection cylinder 24 is installed at the movable section 22 of the mold unit 20. After receiving a signal from the injection mold machine, the hydraulic pressure system 29 makes the void forming apparatus move into the mold cavity. The liquid foaming agent is injected through the injection pin 25, then the void forming apparatus returns to its original position. At the same time, the amount of a liquid foaming agent is predetermined by a feeding meter 28 for preparation of the next cycle.

The feeding meter 28 is installed at the external wall of the movable mold section 22 or to the interior part of the mold unit. Also the feeding meter may be installed at the stationary mold section 21 and to the core part of the slide.

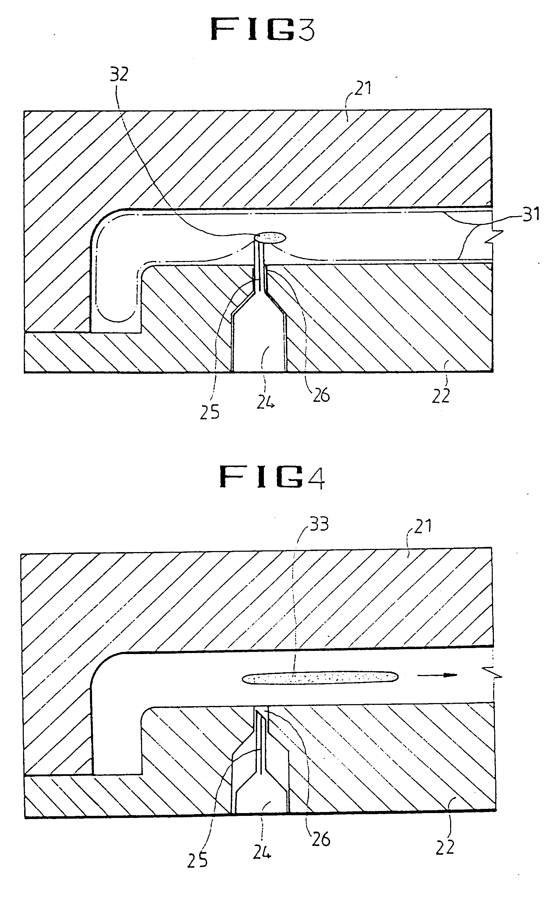

Fig. 3 is a sectional view of the injection mold unit with a void forming apparatus after a liquid foaming agent has been injected into the plastic resin during injection of the plastic resin. On being injected, the liquid foaming agent 32 evaporates with the absorption of the residual heat of the plastic resin.

Fig. 4 shows a sectional view of the injection mold unit with a void forming apparatus after the liquid foaming agent has been gasified so as to form a void in the molded article.

The injected foaming agent continues to expand to offset the volumetric shrinkage of the plastic resin, thus preventing the formation of sink marks. While the plastic resin in the mold cavity is getting solidified, the injection cylinder 24 receives the predetermined amount of a liquid foaming agent from the feeding meter 28 for the next injection. When the resin gets completely solidified, a molded article 10 is extracted.

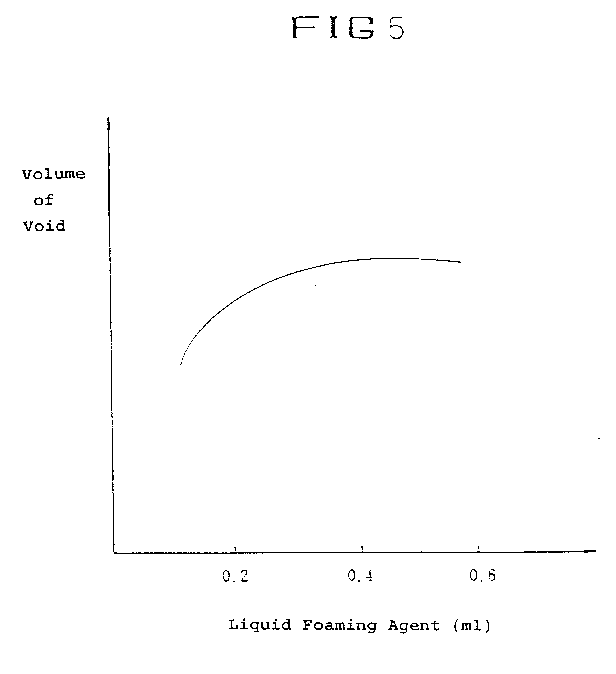

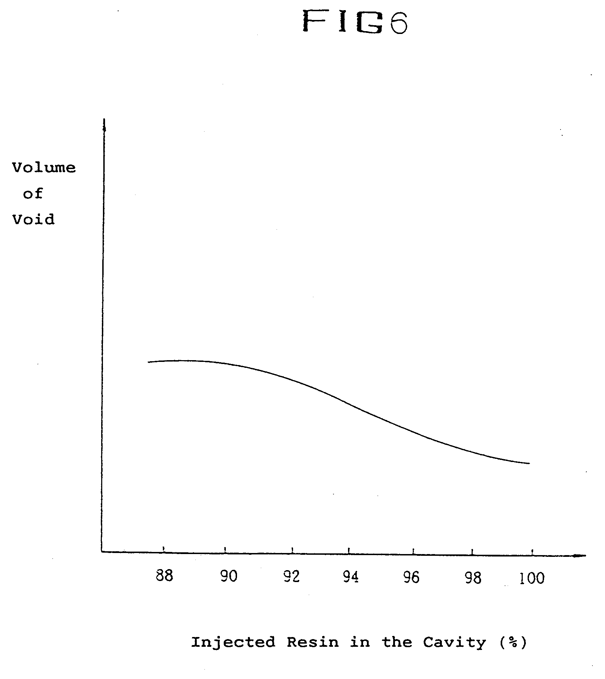

Fig. 5 is a graph showing the influence of the amount of a liquid foaming agent on the size of a void, and Fig. 6 is a graph showing the influence of the amount of a plastic resin in the mold cavity on the size of a void.

The invention may be better understood by reference to the following examples which are intended for purposes of illustration and are not to be construed as in any way limiting the scope of the present invention.

### Example 1

A mold unit 20 shown in Fig. 2 was used in order to manufacture a molded article as shown in Fig. 1. Two sets of a void forming apparatus were installed at the movable mold section 21 of the mold unit 20.

A transparent polystyrene resin was used as thermoplastic resin, and hydrochlorofluorocarbon(HCFC) was used as liquid foaming agent.

The volumetric measurement of HCFC was made at 0.1 cc for the respective void forming apparatus at the left and the right. The liquid foaming agent is injected through the void forming apparatus when 93% by volume of the plastic resin was injected into the mold cavity. The injection time of the liquid foaming agent was one second. The process applying a supplementary pressure was omitted and a molded article was extracted after an immediate cooling process.

When the configuration of the extracted molded article was inspected after cooling, there were no sink marks observed on the surfaces of the molded article.

### Example 2

In order to find out the performance of the liquid foaming agent, the liquid foaming agent was replaced by 1 cc of air. Other conditions were same as in Example 1. The extracted molded article after the cooling showed a small void inside the article, but it also showed a considerable shrinkage on the surfaces of the article.

### Example 3

The molten polystyrene was injected into the mold cavity with the amount measured with 100 percent of the capacity, and a supplementary pressure was applied for 4 seconds. 0.1 cc of HCFC was injected through each void forming apparatus for 2 seconds after the cooling began. After the completion of cooling, the molded article showed that there was a little bit of shrinkage and that the size of the void was small.

### Example 4

Example 4 was carried out under the same conditions as in Example 1 except that the amount of HCFC was increased each time by a total of 0.1 cc. The result is shown in Fig. 5.

### Example 5

Example 5 was carried out by differentiating the amount of injected plastic resin under the same conditions as in Example 1. The result is shown in Fig. 6.

## Claims

1. A molding machine for injection molding a plastic article with a void portion comprising:
void forming apparatus (24, 25) including an injection pin (25) and an injection cylinder (24), said void forming apparatus (24, 25) being installed at a location of a movable mold section (22) or of a stationary mold section (21) of a mold unit (20);
and a feeding meter (28) connected to said void forming apparatus (24, 25), said feeding meter (28) measuring a predetermined amount of a liquid foaming agent and supplying the liquid foaming agent into said injection cylinder (24)
characterized in that
the void forming apparatus can carry out reciprocal movement so that said injection pin (25) may enter a mold cavity during introduction of a plastic material and move out of the mold cavity after injection of a liquid foaming agent.

2. A molding machine of claim 1, wherein said injection cylinder (24) carries our reciprocal movement so that the void forming apparatus (24, 25) may inject a liquid foaming agent into a plastic material through said injection pin (25) and reserve the predetermined amount of the liquid foaming agent.

3. A molding machine of claim 1 or 2, wherein said void forming apparatus (24, 25) is installed at more than one location of said movable mold section (22).

4. A molding machine of claim 1 or 2, wherein said void forming apparatus (24, 25) is installed at more than one location of said stationary mold section (21).

5. A process of injection molding for forming a plastic article which has a void portion in at least a portion thereof, said process comprising;
providing a mold unit, including a movable mold section and a stationary mold section opposite to and in mated alignment with said movable mold section, said mold unit further having a sprue for receiving a plastic material from a molding machine;
clamping said movable mold section and said stationary mold section together to form a mold cavity for said plastic article;
introducing said plastic material in a molten state into said mold cavity through said sprue;
injecting a liquid foaming agent in a liquid state into said plastic material through an injection pin of a void forming apparatus;
vaporizing said liquid foaming agent injected in said plastic material to form a void portion of a plastic article;
removing said resultant plastic article from said mold unit after cooling and hardening of the plastic material,
characterized in that
said liquid foaming agent is injected in a predetermined amount,
said injection pin is retracted immediately after the injection of the liquid foaming agent;
and said plastic material is allowed to cool and harden with said vaporized blowing agent remaining therein, said vaporized blowing agent becoming dormant as said plastic material cools and hardens.

6. A process as in claim 5, wherein said liquid foaming agent is injected in a liquid state without preheating into said plastic material through a void forming apparatus before said plastic material has been completely introduced into said mold cavity.

7. A process as in claim 5, wherein said liquid foaming agent is injected in a liquid state without preheating into said plastic material through a void forming apparatus immediately after said plastic material has been completely introduced into said mold cavity.

8. A process as in any one of claims 5 to 7, wherein said liquid foaming agent is injected into said plastic material in the following steps;
entering an injection pin into said plastic material during introduction of said plastic material;
injecting said liquid foaming agent by automatically operating an injection cylinder; and
moving said injection pin out of said plastic material.

9. A process as in any one of claims 5 to 8, wherein said liquid foaming agent is measured by a feeding meter and the predeterminded amount of said liquid foaming agent is supplied into an injection cylinder.

10. A process as in claim 9, said liquid foaming agent is selected from the group consisting of methanols, ethanols, chlorofluorohydorcarbons, and acetones.

11. A process as in claim 10, wherein said chlorofluorohydrocarbon is 1,1,1,4,4,4,-hexafluorobutane.

## Patentansprüche

1. Vorrichtung zum Spritzgießen eines thermoplastischen Kunstharzformteils mit einem Hohlteil, welche folgendes aufweist:
eine einen Hohlraum bildende Einrichtung (24, 25), welche eine Einspritznadel (25) und einen Einspritzzylinder (24) umfaßt, wobei die einen Hohlraum bildende Einrichtung (24, 25) an einer Stelle eines beweglichen Formteils (22) oder eines stationären Formteils (21) einer Formeinheit (20) angeordnet ist;
und eine Zumeßeinrichtung (28), welche mit der einen Hohlraum bildenden Einrichtung (24, 25) verbunden ist, wobei die Zumeßeinrichtung (28) eine vorbestimmte Menge eines flüssigen Schaum erzeugenden Mittels mißt und das flüssige Schaum erzeugende Mittel in den Einspritzzylinder (24) eingibt,
**dadurch gekennzeichnet**, daß
die einen Hohlraum bildende Einrichtung eine hin- und hergehende Bewegung derart ausführen kann, daß die Einspritznadel (25) in einen Formhohlraum während des Einbringens eines Kunststoffmaterials eintreten kann und aus dem Formhohlraum nach dem Einspritzen eines flüssigen Schaum erzeugenden Mittels herausbewegt werden kann.

2. Vorrichtung nach Anspruch 1, bei der der Einspritzzylinder (24) eine hin- und hergehende Bewegung derart ausführt, daß die einen Hohlraum bildende Einrichtung (24, 25) ein flüssiges Schaum erzeugendes Mittel in ein Kunststoffmaterial über die Spritznadel (25) einspritzen kann und die vorbestimmte Menge an flüssigem, Schaum erzeugenden Mittel bereitgehalten wird.

3. Vorrichtung nach Anspruch 1 oder 2, bei der die einen Hohlraum bildende Einrichtung (24, 25) an mehr als einer Stelle des beweglichen Formteils (22) angeordnet ist.

4. Vorrichtung nach Anspruch 1 oder 2, bei der die einen Hohlraum bildende Einrichtung (24, 25) an mehr als einer Stelle des stationären Formteils (21) vorgesehen ist.

5. Verfahren zum Spritzgießen eines thermoplastischen Kunstharzformteils, welches ein Hohlraumteil in wenigstens einem Bereich hiervon hat, wobei das Verfahren folgendes aufweist:
Vorsehen einer Formeinheit, welche ein bewegliches Formteil und ein stationäres Formteil umfaßt, die einander gegenüberliegend und fluchtgerecht zueinander ausgerichtet sind, wobei die Formeinheit ferner einen Eingußkanal zur Aufnahme eines Kunststoffmaterials von einer Spritzgießvorrichtung hat;
Zusammenspannen von beweglichem Formte und stationärem Formteil, um einen Formhohlraum für den Kunststoffgegenstand zu bilden;
Einleiten des Kunststoffmaterials in einem schmelzflüssigen Zustand in den Formhohlraum über den Eingußkanal;
Einspritzen eines flüssigen Schaum erzeugenden Mittels in einem flüssigen Zustand in das Kunststoffmaterial über eine Einspritznadel einer einen Hohlraum bildenden Einrichtung;
Verdampfen des flüssigen Schaum erzeugenden Mittels, welches in das Kunststoffmaterial eingespritzt worden ist, um ein Hohlraumteil in einem Kunststoffgegenstand auszubilden;
Entnehmen des erhaltenen Kunststoffgegenstandes aus der Formeinheit nach dem Abkühlen und Aushärten des Kunststoffmaterials,
**dadurch gekennzeichnet**, daß
das flüssige Schaum erzeugende Mittel mit einer vorbestimmten Menge eingespritzt wird,
die Einspritznadel unmittelbar nach dem Einspritzen des flüssigen Schaum erzeugenden Mittels zurückgezogen wird;
und das Kunststoffmaterial abkühlen und aushärten gelassen wird, wobei das verdampfte Schaum erzeugende Mittel darin zurückbleibt, und wobei das verdampfte Schaum erzeugende Mittel in Ruhe bleibt, wenn das Kunststoffmaterial abkühlt und aushärtet.

6. Verfahren nach Anspruch 5, bei dem das flüssige, Schaum erzeugende Mittel in einem flüssigen Zustand ohne Vorerwärmung in das Kunststoffmaterial über die einen Hohlraum bildende Einrichtung eingespritzt wird, bevor das Kunststoffmaterial vollständig in den Formhohlraum eingebracht worden ist.

7. Verfahren nach Anspruch 5, bei dem das flüssige Schaum erzeugende Mittel in einem flüssigen Zustand ohne Vorerwärmung in das Kunststoffmaterial über die einen Hohlraum bildende Einrichtung unmittelbar nach dem vollständigen Einbringen des Kunststoffmaterials in den Formhohlraum eingespritzt wird.

8. Verfahren nach einem der Ansprüche 5 bis 7, bei dem das flüssige Schaum erzeugende Mittel in das Kunststoffmaterial gemäß folgenden Schritten eingespritzt wird:
Einführen einer Einspritznadel in das Kunststoffmaterial während des Einbringens des Kunststoffmaterials;
Einspritzen des flüssigen Schaum erzeugenden Mittels durch automatisches Betreiben eines Einspritzzylinders; und
Herausbewegen der Einspritznadel aus dem Kunststoffmaterial.

9. Verfahren nach einem der Ansprüche 5 bis 8, bei dem das flüssige Schaum erzeugende Mittel mittels einer Zumeßeinrichtung zugemessen wird, und die vorbestimmte Menge an flüssigem Schaum erzeugenden Mittel in einen Einspritzzylinder eingeleitet wird.

10. Verfahren nach Anspruch 9, bei dem das flüssige Schaum erzeugende Mittel aus der Gruppe gewählt ist, welche Methanole, Ethanole, Chlorfluorkohlenwasserstoffe und Azetone umfaßt.

11. Verfahren nach Anspruch 10, bei dem der Chlorfluorkohlenwasserstoff 1,1,1,4,4,4,-Hexafluorbutan ist.

## Revendications

1. Appareil de moulage par injection d'un objet en plastique comportant une partie cavité comprenant:
une appareil de formation de la cavité (24, 25) comprenant une aiguille d'injection (25) et un cylindre d'injection (24), ledit appareil de formation de cavité (24, 25) étant installé en un endroit d'une partie mobile de moule (22) ou d'une partie fixe de moule (21) d'un ensemble de moule (20); et
un appareil de mesure d'alimentation (28) relié audit appareil de formation de la cavité (24, 25), ledit appareil de mesure d'alimentation (28) mesurant une quantité prédéterminée d'une agent moussant liquide et alimentant en liquide moussant liquide ledit cylindre d' injection (24)
caractérisé en ce que
l'appareil de formation de la cavité peut réaliser un mouvement alternatif de manière que ladite aiguille d'injection (25) puisse entrer dans une cavité du moule pendant l'introduction d'une matière plastique et sortir de la cavité du moule après injection d'un agent moussant liquide.

2. Appareil de moulage suivant la revendication 1, dans lequel ledit cylindre d'injection (24) réalise un mouvement alternatif de manière que l'appareil de formation de la cavité (24, 25) puisse injecter un agent moussant liquide dans une matière plastique à travers ladite aiguille d'injection (25) et mettre en réserve la quantité prédéterminée de l'agent moussant liquide.

3. Appareil de moulage suivant la revendication 1 ou 2, dans lequel ledit appareil de formation de la cavité (24, 25) est installé dans plus d'un endroit de ladite partie mobile de moule (22).

4. Appareil de moulage suivant la revendication 1 ou 2, dans lequel ledit appareil de formation de la cavité (24, 25) est installé dans plus d'un endroit de ladite partie fixe de moule (21).

5. Procédé de moulage par injection d'un objet en plastique qui comporte une partie cavité dans au moins une de ses parties, ledit procédé consistant:
à prévoir un ensemble de moule comprenant une partie mobile de moule et une partie fixe de moule en face d'elle et alignée et emboîtée avec elle, ledit ensemble de moule ayant encore une carotte pour recevoir une matière plastique d'un appareil de moulage;
à serrer ensemble ladite partie mobile de moule et ladite partie fixe de moule pour former une cavité de moule pour ledit objet en plastique;
à introduire ladite matière plastique à l'état fondu dans ladite cavité de moule par ladite carotte;
à injecter un agent moussant liquide à l'état liquide dans ladite matière plastique par une aiguille d'injection de l'appareil de formation de la cavité;
à vaporiser ledit agent moussant liquide injecté dans ladite matière plastique pour former une partie cavité dans l'objet en plastique;
à démouler ledit objet en plastique résultant dudit ensemble de moule après refroidissement et durcissement de la matière plastique,
caractérisé en ce que
ledit agent moussant liquide est injecté en quantité prédéterminé,
ladite aiguille d'injection est rétractée immédiatement après l'injection de l'agent moussant liquide; et
ladite matière plastique est laissée se refroidir et durcir, ledit agent de gonflement vaporisé restant dans celle-ci, l'agent de gonflement vaporisé devenant inactif quand ladite matière plastique se refroidit et durcit.

6. Procédé suivant la revendication 5, dans lequel ledit agent moussant liquide est injecté à l'état liquide sans préchauffage dans ladite matière plastique à travers l'appareil de formation de la cavité avant que ladite matière plastique ait complètement été introduite dans ladite cavité de moule.

7. Procédé suivant la revendication 5, dans lequel ledit agent moussant liquide est injecté à l'état liquide sans préchauffage dans ladite matière plastique à travers l'appareil de formation de la cavité immédiatement après que ladite matière plastique ait complètement été introduite dans ladite cavité de moule.

8. Procédé suivant l'une quelconque des revendications 5 à 7, dans lequel ledit agent moussant liquide est injecté dans ladite matière plastique dans les phases suivantes:
faire entrer une aiguille d' injection dans ladite matière plastique pendant l'introduction de ladite matière plastique;
injecter ledit agent moussant liquide en faisant fonctionner automatiquement un cylindre d'injection; et
retirer ladite aiguille d'injection de ladite matière plastique.

9. Procédé suivant l'une quelconque des revendications 5 à 8, dans lequel ledit agent moussant liquide est mesuré dans un appareil de mesure d'alimentation et la quantité préterminée dudit agent moussant liquide est envoyée dans un cylindre d'injection.

10. Procédé suivant la revendication 9, dans lequel ledit agent moussant liquide est choisi dans le groupe consistant en méthanols, éthanols, chlorofluorohydrocarbures et acétones.

11. Procédé suivant la revendication 10, dans lequel ledit chlorofluorohydrocarbure est du 1,1,1,4,4,4,-hexafluoributane.
